# EUROPEAN PATENT APPLICATION

(11) **EP 2 991 176 A1**
(43) Date of publication of application: **02.03.2016**
(21) Application number: 14183094.3
(22) Date of filing: 01.09.2014
(51) Int. Cl.: H01S 3/067, H01S 3/04, H01S 3/094, H01S 3/23, G02B 6/44

(54) **Fiber laser cavity unit**

(71) Applicant: Bystronic Laser AG, 3362 Niederönz (CH)
(72) Inventor: Seiler, Thomas, 3661 Uetendorf (CH); Rataj, Thomas, 3363 Oberoenz (CH); Lüdi, Andreas, 3400 Burgdorf (CH)
(74) Representative: Patentbüro Paul Rosenich AG

(57) **Abstract**

The invention relates to a fiber laser cavity unit (1) comprising:
- a fiber (2) having an active fiber portion (20),
- at least one combiner (3, 4) for combining radiation of at least two pump sources (5, 6) and coupled to the fiber (2), and
- a spool body (7) having a circumferential surface (8),
wherein an active fiber portion (20) of fiber (2) is wound onto the circumferential surface (8) of the spool body (7) in at least one loop (9), preferably in multiple loops, characterized in that the at least one combiner (3, 4) is arranged on the spool body (7) within the perimeter defined by the at least one loop (9) of the active fiber portion (20).

## Description

The invention relates to a fiber laser cavity unit according to the preamble of claim 1. The invention also relates to a fiber laser apparatus and to a compact design for a high-power fiber laser cavity.

Fiber lasers with multi-kW output power are spread over the world and are used in many applications, in particular in material processing as e.g. cutting and welding.

Important aspects of a fiber laser are of technical and of commercial nature. The technical criteria are beam quality, nominal optical power, efficiency etc. The most important commercial criterion is the cost-effectiveness of the design.

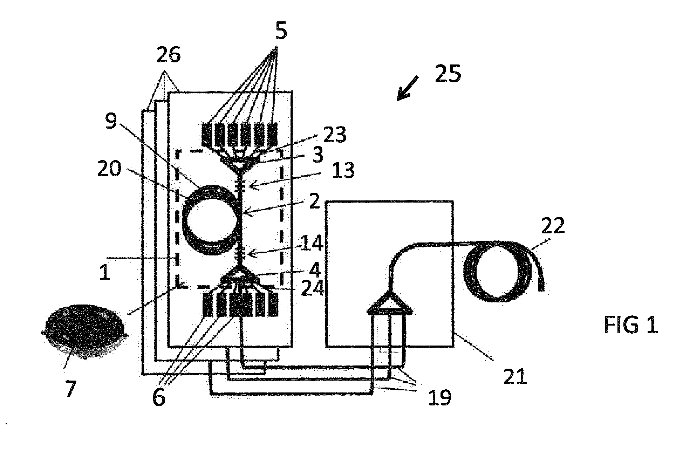

As it was found in recent years, especially the all-in-fiber concept has great potential in cost-effectiveness. Figure 1 shows the principle architecture of an all-in-fiber concept. The characteristic feature of an all-in-fiber laser is that the optical radiation is guided in a fiber, starting at the pump diodes 5, 6 and ending at the output of the delivery fiber 22.

An all-in-fiber laser typically comprises one module fiber combiner 21 that combines the laser radiation generated by several laser modules 26, cf. fig. 1. The laser module contains the laser cavity. The latter is fed by several pump diodes. As a laser system contains many more laser modules than module fiber combiner, the design of the laser module is considerably more cost relevant than the module fiber combiner. The costs of the laser module are mainly driven by the costs of the pumps and the costs of the laser cavity. The latter contains basically the active fiber, the fiber Bragg gratings - a high reflector (HR) and an output coupler (OC) -, the pump combiner(s) and possibly a heat sink.

US20130230061 A1 discloses a fiber laser cavity package. Each element of the fiber laser cavity is grouped into a plurality of sections and each section is placed onto heat conducting surface within the laser cavity.

US2011026895A1 discloses a fiber tray for routing and packaging an optical fiber. The tray includes guiding walls, which establish the path of the optical fiber. The optical fiber is supported and immobilized essentially along its entire length.

Designs known from prior art have several drawbacks: The procedure of assembling a laser cavity unit is very complicated, costly and time-consuming. The laser cavities arrangements according to prior art are of space-wasting design and usually have mechanical deficiencies (lack of robustness). Consequently, also shipping, assembling and servicing becomes very costly.

The object of the invention is to overcome these problems and to provide a fiber laser cavity unit having a compact, place-saving and mechanically robust design. Assembling, handling and servicing should become more cost-effective.

This object is achieved with a fiber laser cavity unit as mentioned above, wherein the at least one combiner is arranged on the spool body within the perimeter defined by the at least one loop of the active fiber portion.

The invention presents a cost-effective and compact mechanical design of a laser cavity, able to generate up to several kW output power. The design can be used for forward pumped, backward pumped, and bidirectional pumped fiber cavity.

The combiner which combines at least two pump sources is also called pump combiner.

Main advantages of the inventive design are:
- Compactness of the laser cavity unit, in particular all components including pump combiners are integrated into the loop or spool perimeter, enabling simple servicing and shipping;
- Robust design;
- Easy fiber handling during assembly;
- Improved and compact cooling of the active components, enabling higher power efficiency.

The combiner(s) are arranged entirely within the contour of the loop. Usually, the combiner(s) have a housing enclosing the optical (or functional) components of the combiner. The housing of the combiner is also arranged within the perimeter defined by the at least one loop. This allows to provide a compact design. The fiber laser cavity unit may be assembled within a fiber laser module or apparatus without complications.

The combiner(s) may be enclosed by the at least one loop (i.e. the plane of the loop(s) intersects with the combiner(s)). Such a design in particular yields a compact and place-minimizing design. Alternatively, the combiner(s) may be arranged at an axial distance from the at least one loop but still within the perimeter defined by the loop. In any case the combiner(s) is/are completely located within the contour of the loop as seen from a direction perpendicular to the loop plane.

The combiner(s) combine the radiation of multiple pump sources (guided by multiple pump fibers to the combiner) into a single fiber in order to pump the active fiber section. The multiple pump fibers are usually joined to a fiber bundle. When assembling the inventive fiber laser cavity unit in a fiber laser apparatus, the end of the fiber bundle may be connected to the pump sources.

The combiner(s) is/are directly or indirectly coupled to the fiber, having the active fiber portion (i.e. gain portion). A fiber portion of certain length may extend at a certain length outside of the combiner and pass over into the active fiber portion. The fiber portion leaving the combiner is coupled to the active fiber portion via a grating. Usually, the ends of the active fiber portion are bordered by Bragg gratings. It is preferred that also the transition fiber portion extending from the combiner to the active fiber portion and the gratings are arranged within the perimeter defined by the at least one loop of the active fiber portion.

Due to the compact and place-saving design the invention may be also denoted as fiber laser cavity unit or fiber laser cavity package.

The (pump) combiner may be of any type combining several fibers into a single fiber, e.g. a tapered fused bundle (TFB). The combiner may combine several equal fibers (N x 1 bundles, with N = number of fibers) that are spliced to a single fiber as a bundle or as tapered bundle. Especially combiners for counter pumping (N +1 x 1) may have a different central fiber, that enables the transmission of the amplified laser light.

The combiner(s) is/are preferably mounted to the spool body, e.g. by screws, clipping or clamping mechanism or glue. Direct mounting of the combiner(s) to the spool body yields further compactness, high mechanical robustness, and good cooling.

Preferably, the fiber laser cavity unit comprises at least two combiners arranged on the spool body within the perimeter defined by the at least one loop of the active fiber portion. Here, one of the combiners may be coupled to one of the ends of the fiber (having the active fiber portion) and the other combiner may be coupled to the other end of the (same) fiber. This arrangement is also called bidirectional pump arrangement, since pump radiation is coupled via both ends of the active fiber portion.

Preferably, the combiners are arranged on the same side of the spool body. This allows simple servicing or exchange of combiners.

Preferably, the combiners are arranged on opposite sides of the spool body. This allows a more place-saving design, since the arrangement may be optimized with respect to other components on the spool body.

Preferably, the at least one combiner is accommodated in a recess of the spool body. This allows to reduce the axial dimension of the laser cavity unit. The recess may be e.g. dimensioned such, that the combiner(s) may be arranged in at least two different positions within the recess, i.e. the recess is larger - preferably longer - than the combiner.

Preferably, the at least one combiner is completely countersunk in the spool body and thus optimally protected.

Preferably, at least a portion of the at least one combiner is enclosed by the at least one loop of the active fiber portion. The loop and the combiner(s) lie within the same plane further reducing the required space.

Preferably, the spool body has at least one recess in which the fiber runs from the at least one combiner towards the circumferential surface of the spool body. Here, also the fiber (extending from the combiner to the active fiber portion) is efficiently protected.

Preferably, the spool body has the shape of a disk, preferably a circular disc. Here, the entire laser cavity unit is disk-shaped and thus optimally adapted for packaging and shipping.

Preferably, the circumferential surface is limited by walls extending in circumferential direction thereby forming a circumferential groove (the circumferential surface forms the bottom of that groove). The active fiber portion runs (loops) within that groove and is thus optimally protected.

Preferably, the active fiber is wound to the circumferential surface of the spool body in a double helix. Here, the transition fiber portion (extending from the combiners to the circumferential surface of the spool body) can be kept very short. This is a preferred embodiment, particularly if both combiners are arranged on the same side of the spool body. The active fiber portion extends in multiple loops forming a first helix in the direction towards the bottom of the spool body and returns in multiple loops forming a second helix in the direction towards the top of the spool body. The transition of the first helix into the second helix is preferably made by a S-shaped run of the active fiber portion, wherein the ends of the S-shape smoothly adapt to the circumferential surface or loop shape, respectively.

Preferably, the spool body is formed by at least two preferably disc-shaped parts abutting against each other with abutting surfaces.

Preferably, a cooling channel extends within the spool body, preferably parallel to the circumferential surface. This allows an active, direct and efficient cooling via a cooling medium flowing through the cooling channel. In an embodiment a cooling channel or cooling coil (e.g. made from steel, copper, or chromium steel) may be inserted between the spool body parts.

Preferably, the cooling channel is formed by at least one groove formed in the abutting surface of at least one part of the spool body. Assembling is made simple and cost-effective. Also here a cooling coil may be inserted into the grooves.

The object is also achieved with a fiber laser apparatus having a plurality of pump sources, preferably pump diodes, at least one fiber laser cavity according to one of the preceding embodiments, wherein the pump sources are optically coupled to the at least one combiner of the fiber laser cavity.

It is preferred that the laser apparatus comprises multiple laser modules each module having a fiber laser cavity according to the invention. By combining the laser radiation of the individual modules high power, preferably multi -kW power may achieved. The invention therefore provides the basis for a compact design for a high-power fiber laser cavity.

Further embodiments of the invention are indicated in the figures and in the dependent claims. The list of reference marks forms part of the disclosure. The invention will now be explained in detail by the drawings. In the drawings:
- Fig. 1: shows a fiber laser apparatus in general all-in-fiber laser architecture,
- Fig. 2: shows a fiber laser cavity unit according to the invention with two pump combiners at the same spool side,
- Fig. 3: shows a fiber laser cavity unit according to the invention with longer variable fibers as in Fig. 2,
- Fig. 4: shows a spool body with countersunk combiners,
- Fig. 5: shows an active fiber coiled in a double-helix coiling technique,
- Fig. 6: shows a fiber laser cavity unit with a combiner on each side of the spool body,
- Fig. 7A+B: shows a fiber laser cavity unit as shown in figure 6, but with a cooling channel extending inside the spool body in two different views, and
- Fig. 8: shows two disc-shaped parts forming the spool body with a cooling channel in between.

Fig. 1 shows a laser fiber apparatus 25 showing the principle architecture of an all-in-fiber concept. The characteristic feature of an all-in-fiber laser is that the optical radiation is guided in a fiber, starting at the pump sources 5, 6 (preferably pump diodes) and ending at the output of the delivery fiber 22.

An all-in-fiber laser typically consists of one module fiber combiner 21 that combines the laser radiation generated by several laser modules 26 and guided to the module fiber combiner 21 by module fibers 19. Each laser module 26 contains a fiber laser cavity unit 1, which is fed by several pump sources 5, 6.

The design is shown with a bidirectional pumped fiber cavity. But the design can equally well be used with only one-sided pump architecture by simply omitting one of the two pump sides. In case of a backward pumped architecture, one side of the active fiber is typically terminated by a mirrored termination.

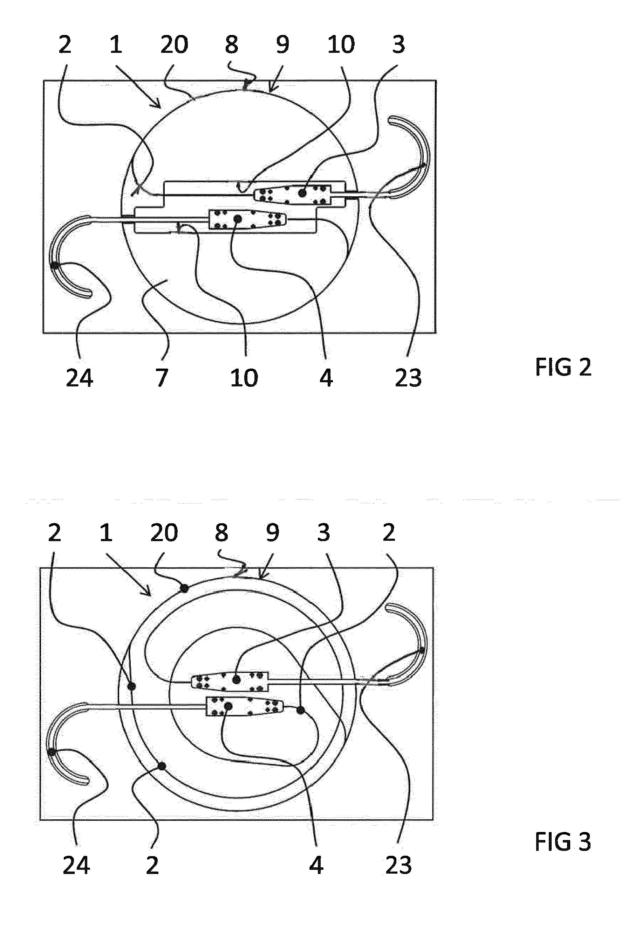

The fiber laser cavity unit 1 comprises a fiber 2 having an active fiber portion 20, two pump combiners 3, 4 (with a housing enclosing the optical or functional parts of the combiner) for combining radiation of the pump sources 5, 6 into the fiber 2, and a spool body 7 having a circumferential surface 8 (Fig. 2). An active fiber portion 20 of fiber 2 is wound onto the circumferential surface 8 of the spool body 7 in at least one loop 9, preferably in multiple loops. The combiners 3, 4 are arranged on the spool body 7 entirely within the perimeter defined by the at least one loop 9 of the active fiber portion 20 (Fig. 2). The combiners 3, 4 are also mounted on the spool body 7, e.g. by screws or a clipping mechanism. The fiber laser cavity unit 1 further comprises Bragg gratings 13, 14 at the ends of the active fiber portion 20. The radiations of the pump sources 5, 6 are guided by means of multiple pump fibers 23, 24 (which are usually bundled to a common fiber bundle; as can be seen in Fig. 2 and 3) to the respective combiners 3, 4.

In the embodiment of Fig. 2 both combiners 3, 4 are arranged on the same (upper) side of the spool body 7. Such a design with two pump combiners 3, 4 at one side of the spool body 7 is advantageous, since the pump combiners 3, 4 may be compactly packaged onto the (upper) surface of the spool body 7.

The active fiber portion 20 is coiled onto the spool body 7 in multiple loops 9. Pump fibers 23, 24 coming from pump sources 5, 6 are entering the pump combiners 3, 4 and are combined to a single fiber 2. The fiber portions of fiber 2 leaving each combiner 3, 4 are spliced to the active fiber portion 20. In order to take into account that fibers are not always equally long and vary from sample to sample, the place of the pump combiner 3, 4 can be changed (in the embodiment of Fig. 2 in radial direction), respectively.

If the variation of fiber lengths is quite large and uncertain, other length compensation is possible as seen in Fig. 3. Here, the fiber 2 spirally converges against the circumferential surface 8. The upper area of the spool body 7 can be used to place that fiber portions.

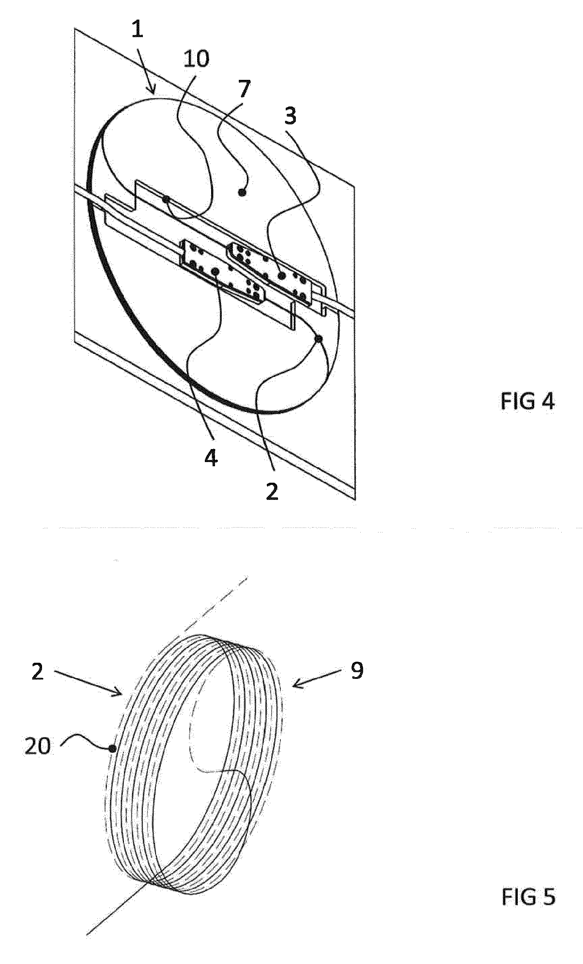

The advantage of having both pump combiners 3, 4 on one side of the spool body 7 is that the fiber handling can be done only from one side. In order to have better access to fiber handling, the two combiners 3, 4 are ideally countersunk mounted within a recess 10. Figure 4 shows the spool in a perspective view, revealing the countersunk pump combiners 3, 4.

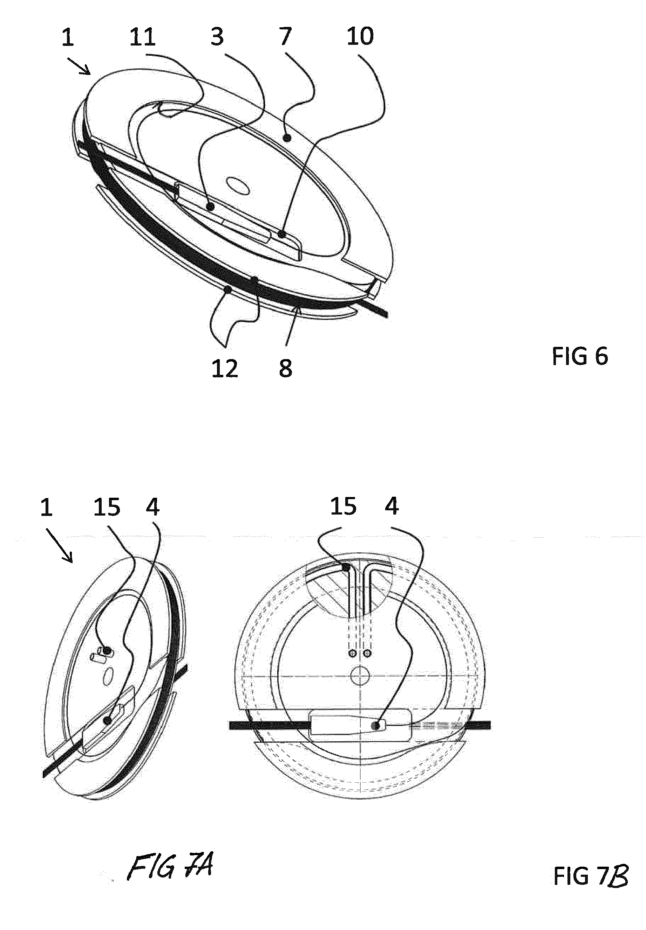

Thus, at least one combiner 3, 4 may be accommodated in a recess 10 of the spool body 7 (Figs. 4, 6). It is preferred that the at least one combiner 3, 4 is completely countersunk in the spool body 7. Here, at least a portion of the combiner 3, 4 may be enclosed by the at least one loop 9 of the active fiber portion 20 (i.e. is on the same level as the loop 9).

The spool body 7 may have at least one recess 11 in which the fiber 2 runs from the at least one combiner 3, 4 towards the circumferential surface 8 of the spool body 7 (Fig. 6, 7).

The realization of the suggested design is best possible when using double-helix fiber coiling technique (Fig. 5). Here, the active fiber portion 20 is wound to the circumferential surface 8 of the spool body 7 in a double helix. Therewith both ends of the active fiber portion 20 end on the same side of the spool body 7. Both (pump-)ends are on one side of the spool and on the other side of the spool the fiber passes from one to the other helix. This may be accomplished as shown in Fig. 5 by means of a S-shaped run of the active fiber portion 20.

Another advantageous design is shown in Fig. 6 and 7 showing a design with one pump combiner 3, 4 at each side of the spool body 7, i.e. the combiners 3, 4 are arranged on opposite (i.e. bottom and top) sides of the spool body 7. Again, the design is compact. The compactness of the fiber laser cavity unit 1 is similar as discussed above, but has on each side one pump combiner 3, 4. This design is especially well suited if traditional fiber coiling is applied. Again for better access to fiber handling, the two combiners 3, 4 are ideally countersunk mounted in a recess 10 (e.g. in a deepening, a groove, etc.).

Another favorite feature that is revealed in Fig. 6 is the groove on the spool perimeter. Here, the circumferential surface 8 is limited by walls 12 (acting as a protection shield) - extending in circumferential direction thereby forming a circumferential groove. This groove is advantageous for protecting the active fiber portion 20. The latter can easily be shielded with a sheet around the spool body 7. Further on, the groove can be filled up with potting material that enhances the protection of the active fiber portion 20 against dirt and mechanical impacts but also improves the cooling of the active fiber portion 20.

The spool body 7 has the shape of a disk, preferably a circular disc, and has flat and space-saving shape.

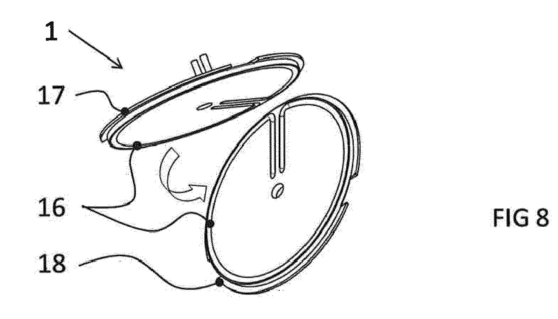

In an embodiment shown in Fig. 8 the spool body 7 is formed by at least two preferably disc-shaped parts 17, 18 abutting against each other with abutting surfaces. A cooling channel 15 may extend within the spool body 7, preferably parallel to the circumferential surface 8 onto which the active fiber portion 20 is wound (see Fig. 7).

The cooling channel 15 may be formed by at least one groove 16 formed in the abutting surface of at least one part 17, 18 of the spool body 7. E.g. a cooling coil or tube may be inserted into that groove 16.

Cooling of the active fiber portion 20 is crucial: The better the cooling, the fewer problems will arise with fiber burns and the higher will be the power efficiency. The spools as proposed can be cooled indirectly by mounting them on heat sink plates. But a much better cooling is the direct cooling by having the cooling medium (e.g. water) inside the spool body 7, as close as possible to the active fiber portion 20 and the pump combiners 3, 4. This can be done by casting the spool body 7 and having inserted a cooling tube inside the spool body, as shown in Fig. 7A and 7B. An inlet and outlet may open at the same (upper) side of the spool body.

A further possibility is given by doing the spool body 7 from two round disc-shaped parts 17, 18. On the inside of the two parts 17, 18 a groove 16 or channel is done. Then the two discs are put together. This can be done e.g. with a bond material, O-ring and/or by welding.

On top of one disc-shaped part 17 the cooling medium connection is fixed. Thus, the cooling medium may flow along the channel or the groove 16 with or without an inlet tube and thereby can provide even better cooling.

Ideally, the spool body is made from aluminum as this material has good thermal properties and is cost efficient.

The inventive fiber laser cavity unit 1 can be used in any fiber laser apparatus 25 having a plurality of pump sources 5, 6, preferably pump diodes, wherein the pump sources 5, 6 are optically coupled to the at least one combiner 3, 4 of the fiber laser cavity unit 1.

The invention is not restricted to these embodiments. Other variants will be obvious for the person skilled in the art and are considered to lie within the scope of the invention as formulated in the following claims. Individual features described in above specification, particularly with respect to the figures may be combined with each other to form other embodiments and/or applied mutatis mutandis to what is described in the claims and to the rest of the description.

**List of reference signs**

| | | | |
|---|---|---|---|
| 1 | Fiber laser cavity unit | 23 | Pump fibers |
| 2 | Active fiber | 24 | Pump fibers |
| 3 | Combiner | 25 | Fiber laser apparatus |
| 4 | Combiner | 26 | Laser module |
| 5 | Pump source | | |
| 6 | Pump source | | |
| 7 | Spool body | | |
| 8 | Circumferential surface | | |
| 9 | Loop | | |
| 10 | Recess for combiner | | |
| 11 | Recess for active fiber | | |
| 12 | Wall | | |
| 13 | Grating | | |
| 14 | Grating | | |
| 15 | Cooling channel | | |
| 16 | Groove | | |
| 17 | Part of spool body | | |
| 18 | Part of spool body | | |
| 19 | Module fiber | | |
| 20 | Active fiber portion | | |
| 21 | Module fiber combiner | | |
| 22 | Delivery fiber | | |

## Claims

1. Fiber laser cavity unit (1) comprising:
- a fiber (2) having an active fiber portion (20),
- at least one combiner (3, 4) for combining radiation of at least two pump sources (5, 6) and coupled to the fiber (2), and
- a spool body (7) having a circumferential surface (8),
wherein an active fiber portion (20) of fiber (2) is wound onto the circumferential surface (8) of the spool body (7) in at least one loop (9), preferably in multiple loops, **characterized in that** the at least one combiner (3, 4) is arranged on the spool body (7) within the perimeter defined by the at least one loop (9) of the active fiber portion (20).

2. Fiber laser cavity unit according to claim 1, **wherein** the fiber laser cavity unit (1) comprises at least two combiners (3, 4) arranged on the spool body (7) within the perimeter defined by the at least one loop (9) of the active fiber portion (20).

3. Fiber laser cavity unit according to claim 2, **wherein** the combiners (3, 4) are arranged on the same side of the spool body (7).

4. Fiber laser cavity unit according to claim 2, **wherein** the combiners (3, 4) are arranged on opposite sides of the spool body (7).

5. Fiber laser cavity unit according to one of the preceding claims, **wherein** the at least one combiner (3, 4) is accommodated in a recess (10) of the spool body (7).

6. Fiber laser cavity unit according to one of the preceding claims, **wherein** the at least one combiner (3, 4) is completely countersunk in the spool body (7).

7. Fiber laser cavity unit according to one of the preceding claims, **wherein** at least a portion of the at least one combiner (3, 4) is enclosed by the at least one loop (9) of the active fiber portion (20).

8. Fiber laser cavity unit according to one of the preceding claims, **wherein** the spool body (7) has at least one recess (11) in which the fiber (2) runs from the at least one combiner (3, 4) towards the circumferential surface (8) of the spool body (7).

9. Fiber laser cavity unit according to one of the preceding claims, **wherein** the spool body (7) has the shape of a disk, preferably a circular disc.

10. Fiber laser cavity unit according to one of the preceding claims, **wherein** the circumferential surface (8) is limited by walls (12) extending in circumferential direction thereby forming a circumferential groove.

11. Fiber laser cavity unit according to one of the preceding claims, **wherein** the active fiber portion (20) is wound to the circumferential surface (8) of the spool body (7) in a double helix.

12. Fiber laser cavity unit according to one of the preceding claims, **wherein** the spool body (7) is formed by at least two preferably disc-shaped parts (17, 18) abutting against each other with abutting surfaces.

13. Fiber laser cavity unit according to one of the preceding claims, **wherein** a cooling channel (15) extends within the spool body (7), preferably parallel to the circumferential surface (8) onto which the active fiber portion (20) is wound.

14. Fiber laser cavity unit according to claim 12 and 13, **wherein** the cooling channel (15) is formed by at least one groove (16) formed in the abutting surface of at least one part (17, 18) of the spool body (7).

15. Fiber laser apparatus (25) having a plurality of pump sources (5, 6), preferably pump diodes, at least one fiber laser cavity unit (1) according to one of the preceding claims, wherein the pump sources (5, 6) are optically coupled to the at least one combiner (3, 4) of the fiber laser cavity unit (1).
